Europäisches Patentamt

European Patent Office

Office européen des brevets

(19)

(11) Veröffentlichungsnummer: **0 106 148**
**B1**

# (12) EUROPÄISCHE PATENTSCHRIFT

(45) Veröffentlichungstag der Patentschrift:
**11.05.88**

(21) Anmeldenummer: **83108964.4**

(22) Anmeldetag: **10.09.83**

(51) Int. Cl.⁴: **B 29 C  43/22**, B 29 C  43/46

(54) Verfahren und Vorrichtung zum Herstellen einer insbesondere mehrfarbig gemusterten Kunststoffbahn.

(30) Priorität: **23.09.82  DE 3235166**

(43) Veröffentlichungstag der Anmeldung:
**25.04.84 Patentblatt 84/17**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**EP - A - 0 046 526**
**DE - C - 969 420**

(73) Patentinhaber: **Hüls Troisdorf Aktiengesellschaft,
Postfach 11 65, D-5210 Troisdorf (DE)**

(72) Erfinder: **Allner, Kurt, Dr., Rembrandstrasse 61,
D-5210 Troisdorf-Eschmar (DE)**
Erfinder: **Brinkmann, Hans, Stresemannstrasse 5,
D-5210 Troisdorf (DE)**
Erfinder: **Kraemer, Bernhard, Dr., Kiefernstrasse 7,
D-5210 Troisdorf-Oberlar (DE)**
Erfinder: **Schulte, Herbert, Ziethenstrasse 22,
D-5210 Troisdorf-Oberlar (DE)**

## Beschreibung

Die Erfindung bezieht sich auf ein Verfahren zum Herstellen einer insbesondere mehrfarbig gemusterten Kunststoffbahn durch Verarbeiten von erwärmten thermoplastischen Chips zu einer zusammenhängenden Bahn mittels Walzen und einer Vorrichtung mit einem Walzenpaar mit zwei mit gleicher Umfangsgeschwindigkeit umlaufenden Walzen.

Bei der Herstellung von thermoplastischen Kunststoffbahnen mit Dicken über 1 mm ist besondere Sorgfalt darauf zu richten, dass die Bahnen lunkerfrei hergestellt werden. Dies gilt insbesondere für Walz- und Kalandrierverfahren. Bei der Herstellung von gemusterten thermoplastischen Kunststoffbahnen, insbesondere mit Marmorierungen, ergibt sich bei Anwendung des Walz- bzw. Kalandrierverfahrens jeweils eine starke Längsorientierung des Musters in Fertigungsrichtung, die meist noch sehr verschwommen ist. Dicke thermoplastische Kunststoffbahnen mit Musterungen, insbesondere Marmorierungen, werden beispielsweise als Fussbodenbeläge in grossen Mengen benötigt. Es gibt bereits eine Reihe bekannter Verfahren, die das Ziel haben, lunkerfreie dicke Bahnen mit möglichst geringer Orientierung der Musterung herzustellen. Beispielsweise wird in der deutschen Patentschrift 1 679 822 ein Verfahren zum Herstellen mehrfarbig gemusterter Kunststoffbahnen beschrieben, wobei erwärmte thermoplastische Chips gestapelt und unter Druck verschweisst und danach aus dem geschweissten Block die thermoplastischen Kunststoffplatten in der gewünschten Dicke abgeschält werden. Dieses Verfahren ermöglicht das Herstellen von lunkerfreien Kunststoffplatten begrenzter Grösse mit einer nicht in einer Richtung orientierten Musterung. Es ist jedoch durch den diskontinuierlichen Herstellungsprozess recht aufwendig.

In der DE-OS-3 031 839 wird ein Verfahren zum kontinuierlichen Herstellen von Bahnen aus thermoplastischen Kunststoffen beschrieben, bei dem die erwärmten Chips kontinuierlich aufgestapelt und kontinuierlich beim Durchlaufen einer Presse verdichtet, verschweisst und abgekühlt werden. Auch dieses Verfahren ermöglicht die Herstellung lunkerfreier dicker thermoplastischer Kunststoffbahnen mit fast orientierungsfreier marmorierter Musterung bei Einsatz entsprechend unterschiedlich eingefärbter Chips. Voraussetzung zur Durchführung dieses Verfahrens ist eine grosse Schwingpresse mit entsprechender Presskraft.

Bei anderen Verfahren zum Herstellen thermoplastischer Kunststoffbahnen werden Walzverfahren angewandt, wobei jedoch die thermoplastische Bahn durch Verbinden mehrerer übereinanderliegender Lagen aufgebaut wird, wie beispielsweise in der DE-AS 1 928 405 beschrieben. Hierbei werden dünne Teilbahnen in geringer Schichtdicke durch Kalandrieren hergestellt, zusammengeschichtet, durch erneutes Kalandrieren verbunden und auf eine geringere Diche ausgewalzt. Das Problem der Lunkerfreiheit dieser Bahnen wird durch das Herstellen von dünnen Teilbahnen im ersten Schritt gelöst. Durch Kalandrieren können nur Bahnen bis etwa 0,8 mm Dicke lunkerfrei hergestellt werden. Deshalb wird bei der Anwendung von Walztechniken zum Herstellen von dickeren gemusterten thermoplastischen Kunststoffbahnen jeweils ein mehrschichtiger Aufbau mit einem mehrstufigen Verfahren gewählt, wie es auch beispielsweise in der US-Patentschrift 3 754 065 beschrieben ist. Die im linearen, glatten Walzenspalt erzielbare Pressung ist nach allgemeiner Erfahrung ausreichend, um lunkerfreie Kunststoffbahnen einer Dicke bis 0,8 mm kontinuierlich in einem Durchgang zu kalandrieren bzw. zu walzen. Bei der Herstellung von gemusterten Kunststoffbahnen ergibt sich darüber hinaus, dass sich vor dem Walzenspalt ein relativ starker Knetwulst bildet, der zu einer sehr starken Vermischung der Farben und damit zu einer verschwommenen Musterung führt. Des weiteren wird durch den Kalandervorgang eine in Fertigungsrichtung stark orientierte Musterung erzielt. Bei der kontinuierlichen oder diskontinuierlichen Anwendung von Flächenpressungen sind lunkerfreie Kunststoffbahnen mit nicht orientierten Musterungen in grösseren Dikken herstellbar, jedoch bei geringeren Fertigungsgeschwindigkeiten.

Der Erfindung liegt die Aufgabe zugrunde, ein wirtschaftliches, kontinuierliches Verfahren zum Herstellen insbesondere mehrfarbig gemusterter, dicker Kunststoffbahnen über 1 mm mittels Walzen vorzusehen. Erfindungsgemäss wird die gestellte Aufgabe durch ein Verfahren gemäss dem Anspruch 1 gelöst.

Überraschend hat sich herausgestellt, dass es mit dem erfindungsgemäss profilierten Walzenspalt möglich ist, einstufig dicke thermoplastische Kunststoffbahnen herzustellen, die lunkerfrei sind. Darüber hinaus bewirkt der profilierte Walzenspalt ein schnelles, direktes Einziehen der Chips und somit eine kurze Verweilzeit der Chips vor dem Walzenspalt und eine Verringerung des rotierenden Knetwulstes vor dem Walzenspalt, so dass sich überraschend eine relativ klare Musterung mit nur sehr geringer Längsorientierung in Fertigungsrichtung ergibt. Durch die partielle unterschiedliche Verdichtung der Bahn wird des weiteren die Orientierung der Musterung verringert. Während nach den bekannten Verfahren mit Walzen mit glatter Oberfläche lunkerfreie Bahnen nur bis zu einer Dicke von etwa 0,8 mm hergestellt werden können und alle dickeren Bahnen über 1,0 mm stets viele Lufteinflüsse enthielten, so dass sie weiterer Nachbearbeitungen wie Abpressen bedurften, werden diese Nachteile durch das erfindungsgemässe Verfahren überraschend beseitigt.

Für die Herstellung von marmoriert gemusterten Fussbodenbelägen werden bevorzugt für das erfindungsgemässe Verfahren unterschiedlich eingefärbte Chips einer Dicke von insbesondere 0,5 bis 10 mm und einer Länge von 5 bis 40 mm aus weichmacherhaltigem Polyvinylchlorid mit einem Weichmachergehalt von 15 bis 40% und Zusatzstoffen wie Füllstoffe, Pigmente, Stabilisatoren u.a. eingesetzt.

Das erfindungsgemässe Fertigungsverfahren durch Walzen baut im wesentlichen auf einer speziell entwickelten und angepassten Profilierung des Walzenspaltes, d.h. einer entsprechenden Profilierung der Walzenoberflächen, auf. Trotz der starken Profilierung ist es möglich, eine glatte, homogene, lunkerfreie Bahn einstufig herzustellen mit Dicken von 1,5 bis 4 mm. Wesentlich ist hierbei auch der lineare Pressdruck im Walzenspalt, wobei der benötigte Druck niedriger ist, je höher die Temperatur der zu verpressenden Chips und die Walzentemperatur gewählt wird. Zum anderen ist der Druck höher, wenn der thermoplastische Kunststoffansatz härter ist. Darüber hinaus hängt der Druck auch von der Dicke der Bahn ab. Bei Einsatz von Chips aus weichmacherhaltigem PVC beträgt der Liniendruck 100–500 kN/ m (kg/cm).

Die Profilierung der Walzenoberfläche in Verbindung mit dem Temperaturniveau der Walzen und der Chips ist wesentlich für die Reduzierung des vor dem Walzenspalt rotierenden Knetwulstes, wodurch die Verweilzeit der Chips im Knetwulst verringert wird und damit eine klare Dessinierung d.h. Musterung erzielt wird, damit die Farben sich nicht zu sehr vermischen können. Die Reduzierung des Knetwulstes ermöglicht also die klare, ausdrucksvolle und wenig gerichtete Musterung. Die sonst bei kalandrierten thermoplastischen Kunststoffbahnen typische Längsorientierung der Musterung wird weitgehend abgebaut.

Des weiteren wird durch die Profilierung der Walzenoberfläche gemäss der Erfindung und durch den geringen Knetwulst vor und im Walzenspalt auch das Entweichen der zwischen den Chips eingeschlossenen Luft begünstigt und damit die Herstellung der lunkerfreien Bahn ermöglicht.

Es wurde gefunden, dass zwischen Form und Tiefe der Profilierung des Walzenspaltes bzw. der Walzenoberflächen sowie der Walzenoberflächentemperatur und der Qualität der hergestellten Bahn eine Abhängigkeit besteht. Die erfindungsgemässe Vorrichtung zum Durchführen des Verfahrens zeichnet sich dadurch aus, dass die Oberflächen der Walzen gleichmässig profiliert sind mit kreuzweise schraubenlinienförmig verlaufenden Kanälen, zwischen denen etwa konisch stumpfartige Strukturkörper ausgeformt sind, wobei die Kanäle eine Tiefe von 0,1 bis 0,5 mm, gemessen ab Oberfläche der Strukturkörper, aufweisen. Die Strukturkörper können z.B. stumpfe Pyramiden, sich verjüngende stumpfartige Körper sein, die ein Pyramidennetz auf der Walzenoberfläche bilden. Die zwischen den Strukturkörpern verlaufenden Kanäle dienen als Entlüftungskanäle und ermöglichen den Austritt der Luft an den Walzenseiten. Die abgeflachte Oberfläche der Strukturkörper kann zylindrische, rhombische, rechteckige und vorzugsweise quadratische Gestalt aufweisen mit einer Grösse von etwa 0,5 bis 4 mm².

Diese Strukturkörper, die während des Ausformungsprozesses der Bahn im Walzenspalt in den Thermoplasten eindringen, verdichten diese zusätzlich. Diese zusätzliche, partielle Verdichtung ermöglicht die Fertigung glatter Oberflächen mit Prägestruktur der Bahn. Weiterhin wird durch diese partielle Verdichtung die im Thermoplasten eingeschlossene Luft in die Kanäle gedrückt und seitlich abgeführt. Die Form der einzelnen Strukturkörper muss verjüngend, konisch, mit einer obenliegenden Fläche ausgebildet sein, wobei die konische Form das leichte Herauslösen der einzelnen Strukturkörper aus der Bahn nach dem Verlassen des Walzenspaltes beim Ausformungsprozess ermöglicht und die abgeflachte Oberfläche der Strukturkörper je nach Grösse den Verdichtungsgrad erhöht.

Der Walzendurchmesser der profilierten Walzen sollte so gewählt sein, dass ein einwandfreies Ausformen bei gleichzeitig guter Entlüftung der Bahn über die Profilierung gewährleistet ist, geeignete Walzendurchmesser liegen zwischen 300 bis 500 mm. Walzenabzugsgeschwindigkeiten, d.h. Fertigungsgeschwindigkeiten, liegen im Bereich von 0,5 bis 5 m/Min, abhängig von der Dicke der Bahn, den Eigenschaften des gewählten thermoplastischen Kunststoffansatzes für die Chips, der Massetemperatur der Chips, der Walzentemperatur, der Walzenprofilierung und dem gewählten Liniendruck im Walzenspalt.

Die Grösse des Walzenspaltes zum Herstellen einer Folienbahn einer Dicke von 1,5 bis 4 mm ist auch abhängig von den Eigenschaften des thermoplastischen Kunststoffansatzes, wobei weichmacherhaltige Kunststoffansätze stärker und hochgefüllte Kunststoffansätze weniger quellen. Die Grösse des zwischen den Oberflächen der Strukturkörper gebildeten Walzenspaltes zum Herstellen von Bahnen einer Dicke von etwa 1,5 bis 4 mm beträgt etwa 0,2 bis 1,5 mm.

Die gewählte Konizität der Strukturkörper sollte zwischen 15 bis 60° liegen, um ein leichtes Ausformen zu ermöglichen.

Eine gute Entlüftung wird bei der erfindungsgemässen Profilierung der Walzen dadurch erreicht, dass die Kanäle eine Breite am Fusse der Strukturkörper von etwa 0,2 bis 1,5 mm vorzugsweise 0,2 bis 1,0 mm aufweisen.

Die Profilierung der Walzenoberflächen gemäss der Erfindung kann mit einer feinen Verzahnung verglichen werden. Es ist bei der Durchführung des erfindungsgemässen Verfahrens nicht erforderlich, dass die Strukturkörper der beiden Walzen ineinander kämmen. Es können auch zwei Strukturkörper gegeneinander laufen.

Es ist auch denkbar, dass die beiden Walzen nicht ganz gleich strukturiert sind, sondern unterschiedliche Formen aufweisen. Beispielsweise ist es denkbar, die Unterseite der herzustellenden thermoplastischen Bahn mit einer grösseren Prägestruktur zu versehen, damit für Bodenbeläge beispielsweise noch nachträglich ein Kleberauftrag in diese Prägestruktur aufgebracht werden kann.

Die Erfindung wird in der Zeichnung anhand der Figuren 1 bis 6 beispielhaft erläutert. Es zeigen

Figur 1 schematisch die Vorrichtung und den Verfahrensablauf,

Figur 2 einen auszugsweisen Querschnitt der hergestellten Bahn,

Figur 3 eine schematische Teildarstellung der Oberflächenprofilierung der Walze,

Figur 4 eine Ansicht der Profilierung der Walzenoberfläche mit Strukturkörpern,

Figur 5 eine vergrösserte Aufsicht auf die Strukturkörper nach Figur 3 und

Figur 6 einen Querschnitt durch die Strukturkörper (Auszug).

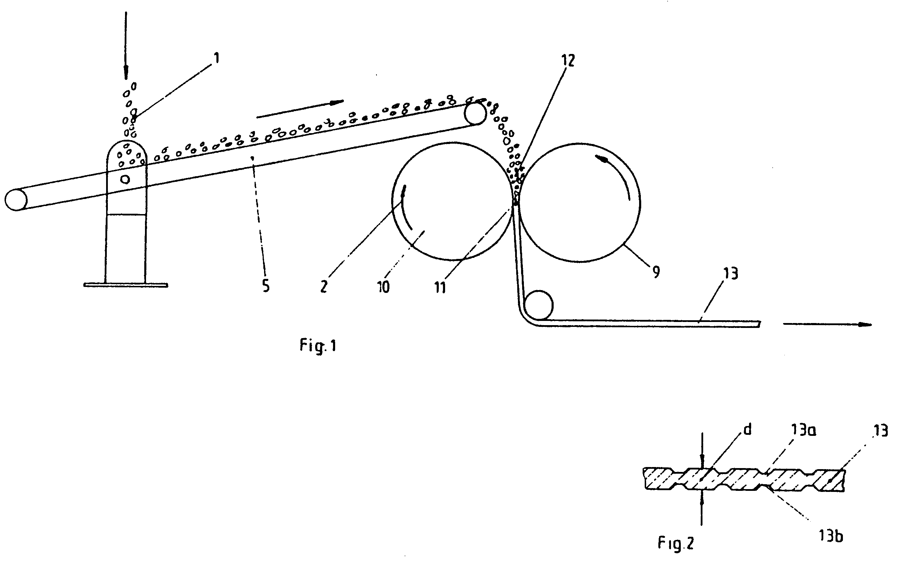

Zum Herstellen einer thermoplastischen, lunkerfreien, insbesondere gemusterten Bahn 13 gemäss Figur 1 werden thermoplastische Chips 1 eingesetzt. Diese Chips können aus kalandrierten, thermoplastischen Folien durch Zerkleinerung derselben, durch Extrudieren und Granulieren oder andere bekannte Verfahren hergestellt werden. Ihre durchschnittliche Dicke sollte zwischen 0,5 bis 10 mm und ihre Länge, je nach Dessinierungswunsch, zwischen 10 und 40 mm liegen. Kleinere und grössere Teile sind ebenfalls möglich. Die Anzahl der einzelnen Farben und die Menge der jeweiligen Chips und die Grösse derselben bestimmen die Dessinierung der Bahn. Die Chips 1 werden beispielsweise mittels eines umlaufenden und changierenden Förderbandes 5 dem profilierten Walzenspalt 11, der von den beiden Walzen 9, 10 gebildet wird, zugeführt. Die Walzen 9, 10 laufen mit gleicher Geschwindigkeit 2 um. Vor dem Walzenspalt 11 bildet sich der Knetwulst 12, der bei Ausbildung des Walzenspaltes 11 gemäss der Erfindung durch eine entsprechende Profilierung der Walzenoberflächen der Walzen 9, 10 relativ klein ist. Die Chips werden sehr schnell durch die profilierten Walzen in den Walzenspalt 11 eingezogen, zu der Bahn 13 verdichtet und verpresst. Bevorzugt wird der Walzenspalt vertikal angeordnet.

In der Figur 2 ist schematisch im Querschnitt die hergestellte Bahn 13 dargestellt. Die beidseitig geprägte Oberfläche 13a, 13b der Bahn ist ersichtlich. Die Dicke der Bahn d, die einwandfrei lunkerfrei mit dem erfindungsgemässen Verfahren und Vorrichtung herstellbar ist, liegt zwischen 1,5 und 4 mm. Dieser Dicke der Bahn entspricht ein Walzenspalt von 0,2 bis etwa 1,5 mm, in Abhängigkeit von den Verfahrensparametern.

Die einstufig nach dem geschilderten Verfahren hergestellte Bahn 13 mit geprägter Oberfläche ist fertig in ihrer endgültigen Gestalt, sie kann dann zu den gewünschten Abmessungen zu Bahnen oder Platten geschnitten werden. Sie muss lediglich noch einer Temperatur zum Spannungsfreimachen unterworfen werden, beispielsweise durch eine Wärmebehandlung oder andere bekannte Temperaturverfahren. Eine Oberflächenvergütung ist nur dann erforderlich, wenn beispielsweise eine völlig ebene Oberfläche gewünscht wird. Hierzu kann beispielsweise eine Oberfläche der Bahn 13 noch geschliffen oder abgepresst werden.

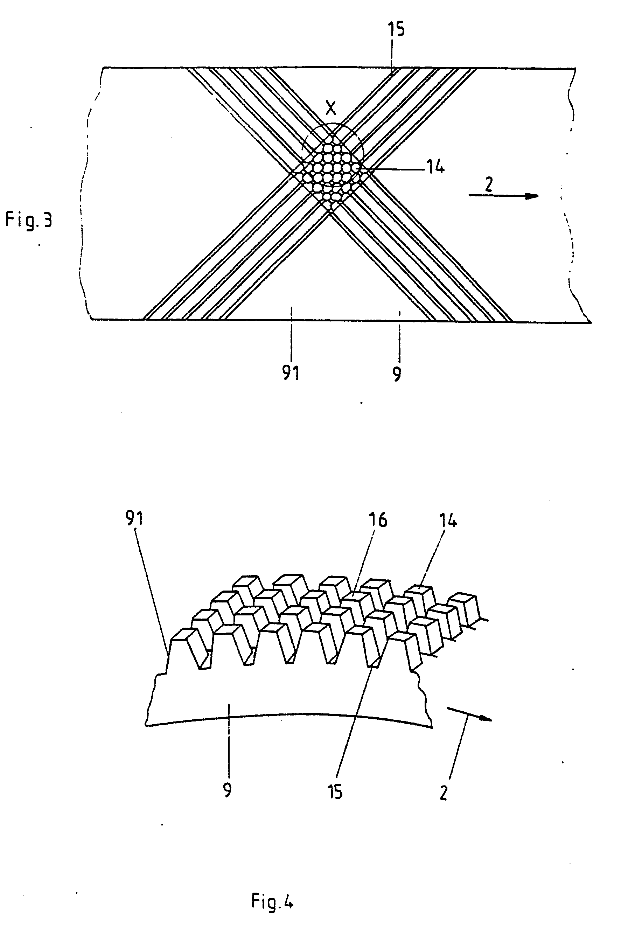

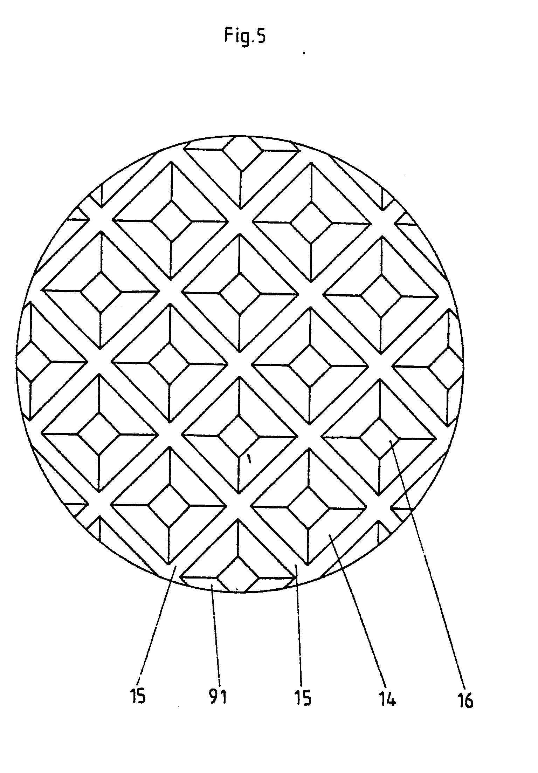

In der Figur 3 ist schematisch in einer Aufsicht auf die Oberfläche 91 der Walze 9 dargestellt, wie diese profiliert werden. Die Kanäle 15 für die Entlüftung sind kreuzweise über die Oberfläche der Walze 9 verlaufend angeordnet, mit 2 ist die Walzenumlaufrichtung angezeigt. Zwischen den einander kreuzenden Kanälen 15 sind die Strukturkörper 14, die für die Profilierung verantwortlich sind, ausgebildet. In den Figuren 4, 5 und 6 ist eine beispielhafte Ausbildung der Strukturkörper näher ersichtlich. In der Figur 4 wird in einer seitlichen Ansicht auf einen Ausschnitt der Walzen 9 die Gestalt der Strukturkörper 14 ersichtlich. Die pyramidenstumpfartigen Strukturkörper 14 weisen eine abgeflachte Oberfläche 16 auf, die der partiellen unterschiedlichen Verdichtung der thermoplastischen Chips beim Durchlaufen des Walzenspaltes zum Herstellen der zusammenhängenden Bahn dient. Je grösser diese Oberfläche 16 ist, desto stärker ist der partielle Verdichtungsgrad der Bahn. In der Aufsicht auf Figur 5 wird die konisch stumpfartige Gestalt der Strukturkörper 14 nochmals deutlich. Figur 5 stellt praktisch eine vergrösserte Darstellung der Ansicht X nach Figur 3 dar. Zwischen den Strukturkörpern 14 verlaufen kreuzweise die Kanäle 15, die schraubenlinienförmig über die Oberfläche der Walzen 9 bzw. 10 geführt sind.

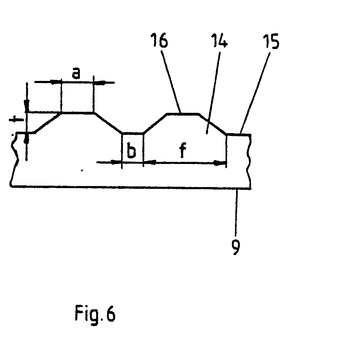

In der Figur 6 ist im Ausschnitt ein Querschnitt durch zwei Strukturkörper 14 dargestellt, wobei die wesentlichen Bemessungsangaben zu ersehen sind. Die Oberfläche 16 (a) der Strukturkörper liegt bevorzugt 0,4 bis 4 mm², die Breite (b) der Kanäle 15 bevorzugt zwischen 0,2 und 1,5 mm, die grösste Breite (f) der Sturkturkörper an der Basis etwa 3 bis 5 mm und die Tiefe der Kanäle (t) etwa zwischen 0,1 und 0,5 mm.

Mit den erfindungsgemässen Verfahrensbedingungen und Vorrichtungsausgestaltung ist es möglich, eine 1,5 bis 4 mm dicke thermoplastische Kunststoffbahn mit geringer Längsorientierung eines Musters mehrfarbig dessiniert und lunkerfrei herzustellen. Das Verfahren ist aufgrund seiner Einstufigkeit besonders wirtschaftlich.

**Patentansprüche**

1. Verfahren zum Herstellen einer insbesondere mehrfarbig gemusterten Kunststoffbahn (13) durch Verarbeiten von erwärmten thermoplastischen Chips (1) zu einer zusammenhängenden Bahn mittels Walzen (9, 10) dadurch gekennzeichnet, dass die auf etwa 140° bis 160 °C erwärmten Chips (1) in einen beidseitig bis zu einer Tiefe von etwa 0,1 bis 0,5 mm profilierten Walzenspalt (11) eingezogen und die Chips (1) bei einer Walzentemperatur von etwa 120 bis 180 °C und einem Liniendruck im Walzenspalt (11) von 100 bis 600 KN/m (kg/cm) partiell unterschiedlich verdichtet werden, wobei die zwischen den Chips (1) eingeschlossene Luft über die profilierte Walzenoberfläche (91) entweicht und die Chips (1) zu einer zusammenhängenden, lunkerfreien, mindestens 1,5 mm dicken Bahn (13) mit geprägter Oberfläche geformt werden und wobei die Oberflächen (91) der Walzen (9, 10) mit kreuzweise schraubenlinienförmig verlaufenden Kanälen (15) profiliert sind, zwischen denen etwa konisch stumpfartige Strukturkörper (14) ausgeformt sind.

2. Verfahren nach Anspruch 1, dadurch gekennzeichnet, dass Chips einer Dicke von insbesondere 0,5 bis 10 mm und Länge von 5 bis 40 mm aus weichmacherhaltigem Polyvinylchlorid mit einem Weichmachergehalt von 15 bis 40% und Zusatzstoffen wie Füllstoffe, Pigmente, Stabilisatoren u.a. eingesetzt werden bei einer Temperatur der erwärmten Chips von 140 °C bis 160 °C.

3. Vorrichtung zum Durchführen des Verfahrens nach Anspruch 1 oder 2 mit einem Walzenpaar mit zwei mit gleicher Umfangsgeschwindigkeit umlaufenden Walzen, dadurch gekennzeichnet, dass die Oberflächen (91, 101) der Walzen (9, 10) mit kreuzweise schraubenlinienförmig verlaufenden Kanälen (15) profiliert sind, zwischen denen etwa konisch stumpfartige Strukturkörper (14) ausgeformt sind, wobei die Kanäle eine Tiefe von etwa 0,1 bis 0,5 mm, gemessen ab Oberfläche der Strukturkörper, aufweisen.

4. Vorrichtung nach Anspruch 3, dadurch gekennzeichnet, dass die abgeflachte Oberfläche (16) der Strukturkörper zylindrisch, rhombisch, rechteckig oder vorzugsweise quadratisch mit einer Grösse von etwa 0,5 bis 4 mm² ausgebildet ist.

5. Vorrichtung nach Anspruch 3 oder 4, dadurch gekennzeichnet, dass die Grösse des zwischen den Oberflächen (16) der Strukturkörper (14) gebildeten Walzenspaltes (11) zum Herstellen einer Bahn einer Dicke von etwa 1,5 mm bis 4 mm etwa 0,2 bis 1,5 mm beträgt.

6. Vorrichtung nach einem der Ansprüche 3 bis 5, dadurch gekennzeichnet, dass der Strukturkörper (14) eine Konizität von 15 bis 60° aufweist.

7. Vorrichtung nach einem der Ansprüche 3 bis 6, dadurch gekennzeichnet, dass die Kanäle (15) eine Breite b am Fusse der Strukturkörper von 0,2 bis 1,5 mm, vorzugsweise 0,2 bis 1,0 mm aufweisen.

## Claims

1. Process for the manufacture of a web of plastics material (13), in particular one with a multicoloured pattern, by processing heated thermoplastic chips (1) into a continuous web by means of rolls (9, 10), characterised in that the chips (1) heated to approximately 140° to 160 °C are drawn into a roll gap (11) profiled on both sides to a depth of approximately 0.1 to 0.5 mm and the chips (1) are partially compressed differentially at a roll temperature of approximately 120 to 180 °C and a linear pressure in the roll gap (11) of 100 to 600 KN/m (kg/cm), wherein the air trapped between the chips (1) escapes via the profiled roll surface (91) and the chips (1) are shaped into a continuous cavityfree track (13) at least 1.5 mm thick with embossed surface and wherein the surfaces (91) of the rolls (9, 10) are profiled with intersecting helically-running channels (15), between which approximately conical frustum-like structure bodies (14) are blocked out.

2. Process according to claim 1, characterised in that chips in particular 0.5 to 10 mm thick and 5 to 40 mm long made from plasticizer-containing polyvinyl chloride with a plasticizer content of 15 to 40% and additions such as fillers, pigments, stabilisers etc., are used, with the temperature of the heated chips being 140 °C to 160 °C.

3. Device for performing the process according to claim 1 or 2 with a roll pair with two rolls revolving at the same peripheral speed, characterised in that the surfaces (91, 101) of the rolls (91, 10) are profiled with intersecting helically-running channels (15) between which approximately conical frustum-like structuring bodies (14) are blocked out, with the channels having a depth of approximately 0.1 to 0.5 mm, measured from the surface of the structuring bodies.

4. Device according to claim 3, characterised in that the flattened surface (16) of the structuring body is formed cylindrically, rhombically, rectangularly or preferably square with a size of approximately 0.5 to 4 mm².

5. Device according to claim 3 or 4, characterised in that the size of the roll gap (11), formed between the surfaces (16) of the structuring bodies (14), is approximately 0.2 to 1.5 mm for manufacturing a web approximately 1.5 mm to 4 mm thick.

6. Device according to one of the claims 3 to 5, characterised in that the structuring body (14) has a conicity of 15 to 60°.

7. Device according to one of the claims 3 to 6, characterised in that the channels (15) have a width b at the foot of the structure bodies of 0.2 to 1.5 mm, preferably 0.2 to 1.0 mm.

## Revendications

1. Procédé pour la fabrication d'une bande (13) à dessins, notamment à dessins multicolores, en matière plastique, par la transformation de copeaux (1) thermoplastiques chauffés, en une bande cohérente, au moyen de cylindres (9, 10), caractérisé en ce que les copeaux (1) chauffés à environ 140° à 160 °C sont entraînés dans la fente (11), profilée des deux côtés jusqu'à une profondeur d'environ 0,1 à 0,5 mm, entre les cylindres, et, à une température d'environ 120° à 180°C des cylindres et une pression linéaire de 100 à 600 KN/m (kg/cm) dans la fente (11) entre les cylindres, sont comprimés de façon partiellement différente, l'air emprisonné entre les copeaux (1) s'échappant par la surface profilée (91) des cylindres et les copeaux (1) étant transformés en une bande (13) cohérente exempte de bulles d'une épaisseur d'au moins 1,5 mm à surface gaufrée et les surfaces (91) des cylindres (9, 10) étant profilées avec des canaux (15) s'étendant sous une forme hélicoïdale en se croisant, canaux entre lesquels sont formés des corps de structure (14) à peu près tronconiques.

2. Procédé selon la revendication 1, caractérisé en ce que des copeaux d'une épaisseur notamment de 0,5 à 10 mm et d'une longueur de 5 à 40 mm en polychlorure de vinyle contenant un plastifiant avec une teneur de plastifiant de 15 à 40% et des additifs tels que des matières de charge, pigments, stabilisateurs etc. sont utilisés, la température des copeaux chauffés étant comprise entre 140 °C et 160 °C.

3. Dispositif pour l'exécution du procédé selon la revendication 1 ou 2 comportant une paire de cylindres avec deux cylindres tournant à la même vitesse circonférentielle, caractérisé en ce que les surfaces (91, 101) des cylindres (9, 10) sont profilées avec des canaux (15) s'étendant sous une forme hélicoïdale, canaux entre lesquels sont formés des corps de structure (14) à peu près tronconiques, les canaux présentant une profondeur d'environ 0,1 à 0,5 mm mesurée à partir de la surface des corps de structure.

4. Dispositif selon la revendication 3, caractérisé en ce que la surface (16) aplatie des corps de structure est réalisée circulaire, en losange, rectangulaire ou de préférence carrée, avec une superficie d'environ 0,5 à 4 mm².

5. Dispositif selon la revendication 3 ou 4, caractérisé en ce que la taille de la fente (11) entre les cylindres, formée entre les surfaces (16) des corps de structure (14) mesure environ 0,2 à 1,5 mm en vue de la fabrication d'une bande d'une épaisseur d'environ 1,5 à 4 mm.

6. Dispositif selon l'une quelconque des revendications 3 à 5, caractérisé en ce que le corps de structure (14) présente une conicité de 15 à 16°.

7. Dispositif selon l'une quelconque des revendications 3 à 6, caractérisé en ce que les canaux (15) présentent une largeur b au pied des corps de structure de 0,2 à 1,5 mm, de préférence 0,2 à 1,0 mm.

Fig.1

Fig.2

Fig. 3

15

X

14

2

91    9

91    16    14

9    15    2

Fig. 4

Fig.5

15    91    15    14    16

Fig. 6